# EUROPÄISCHE PATENTSCHRIFT

(11) **EP 1 947 367 B1**
(45) Veröffentlichungstag und Bekanntmachung des Hinweises auf die Patenterteilung: **18.08.2010**
(21) Anmeldenummer: 08000135.7
(22) Anmeldetag: 05.01.2008
(51) Int. Cl.: F16F 15/129

(54) **Kupplungsscheibe**
Clutch disc
Disque de couplage

(30) Priorität: 17.01.2007 DE 102007002531; 08.12.2007 DE 102007059284
(43) Veröffentlichungstag der Anmeldung: 23.07.2008
(73) Patentinhaber: ZF Friedrichshafen AG, 88038 Friedrichshafen (DE)
(72) Erfinder: Klenkert, Klaus, 97440 Werneck-Ettleben (DE); Buer, Gerald, 96172 Mühlhausen (DE); Strobel, Rainer, 97262 Hausen (DE); Ankenbauer, Ignaz, 97720 Nüdlingen (DE)

(56) Entgegenhaltungen:
- DE-A1- 4 408 881
- DE-U1- 8 611 990

## Beschreibung

Die Erfindung betrifft eine Kupplungsscheibe, insbesondere eine Kupplungsscheibe einer Reibungskupplung, die eine Nabe und eine mit dieser drehfest verbundene Nabenscheibe aufweist, wobei die Nabenscheibe über eine eine Anzahl Federelemente aufweisende Torsionsschwingungsdämpfungsvorrichtung mit mindestens einem mindestens einen Reibbelag tragenden Belagträger verbunden ist, wobei die Torsionsschwingungsdämpfungsvorrichtung weiterhin mindestens ein mit dem Belagträger verbundenes Deckblech aufweist, wobei am Deckblech ein Reibring axial vorgespannt anliegt und wobei das Deckblech mindestens ein zumindest über einen Teil des Umfangs des Deckblechs umlaufendes Zentrierelement für den Reibring aufweist.

Kupplungsscheiben dieser Art sind im Stand der Technik hinlänglich bekannt. Sie dienen zum Übertragen eines Drehmoments, das dadurch in die Kupplungsscheibe eingeleitet wird, dass sie zwischen einem Schwungrad eines Antriebsmotors und einer Anpressplatte platziert und durch die Anpressplatte axial gegen das Schwungrad gedrückt wird.

Um Drehschwingungen zu vermeiden, ist zumeist eine Torsionsschwingungsdämpfungsvorrichtung in der Kupplungsscheibe vorgesehen, mit der Drehschwingungen gedämpft werden können. Hierzu wird eine Nabenscheibe über eine Anzahl Schraubenfedern, die in entsprechenden Fensterausschnitten der Nabenscheibe platziert sind, relativ zu dem Belagträger im Rahmen des Federweges der Schraubenfedern drehbeweglich gehalten. Damit entstehende Torsionsschwingungen gut gedämpft werden können, sind ferner Reibringe vorgesehen, die an seitlich an der Kupplungsscheibe angeordneten Deckbleche anliegen, wobei mittels einer Tellerfeder eine axiale Vorspannkraft zwischen Deckblechen und Reibringen erzeugt wird, so dass ein dämpfender Effekt hervorgerufen wird.

Die Reibringe müssen möglichst genau relativ zum Deckblech zentriert und geführt sein. Hierzu weist das Deckblech bei vorbekannten Lösungen eine Einprägung auf einer Seite auf, die zu einer Materialverdrängung in axiale Richtung auf der anderen Seite des Deckblechs führt. Das hier axial herausgedrängte Material stellt ein Zentrierelement für den Reibring dar. Bekannt ist es, dass eine Einprägung mit im Radialschnitt rechteckförmiger Kontur vorgesehen wird, die auf der Gegenseite zu einer entsprechenden im Radialschnitt rechteckförmigen Kontur des Zentrierelements geformt ist.

Diese vorbekannte Ausgestaltung der Zentrierelemente leidet unter gewissen Nachteilen:

Infolge des relativ geringen Bauraums begrenzt die Form der Zentrierelemente die Größe der Reibringe. Damit ist auch dem Verschleißvolumen des Reibrings eine enge Grenze gesetzt. Ferner ist das erzeugbare Reibmoment durch das Andrücken des Reibrings an die eine Seite des Deckblechs entsprechend begrenzt, da die Auflagefläche des Reibrings am Deckblech limitiert ist. Um ein hinreichendes Reibmoment zu erzeugen, muss der Reibring axial möglichst stark an das Deckblech angepresst werden. Auch diesbezüglich bestehen Grenzen infolge des geringen Bauraums der Kupplungsscheibe, die der Forderung zuwider laufen, die Federvorspannkraft, mit der der Reibring gegen das Deckblech gedrückt wird, möglichst gering zu halten. Nachteilig ist weiterhin, dass sich die Ausformung der Geometrie des Zentrierelements nur mit begrenzter Genauigkeit bewerkstelligen lässt. Infolge der Materialverdrängung beim Prägeprozess besteht die Gefahr, dass sich die Zentrierelemente und insbesondere deren Zentrierflächen geometrisch nicht exakt genug ausbilden, was für die Funktion der Torsionsschwingungsdämpfungsvorrichtung nachteilig ist. Problematisch ist auch ein relativ hoher Verzug im Bereich der Zentrierfläche der Zentrierelemente, die aus einem hohen Umformgrad bei der Fertigung der Zentrierelemente resultieren.

Der Erfindung liegt daher die **Aufgabe** zugrunde, eine Kupplungsscheibe der eingangs genannten Art so fortzubilden, dass die genannten Nachteile vermindert werden. Es soll also insbesondere möglich werden, größere Reibringe mit höherem Verschleißvolumen einzusetzen und dabei mit geringeren axialen Anpresskräften zwischen Reibring und Deckblech arbeiten zu können, was die Federvorspannung zwischen Reibring und Deckblech reduziert. Bei gleichbleibenden Axialkräften soll ein höheres Reibmoment erzeugbar werden. Ferner soll die Genauigkeit der Zentrierung erhöht werden, indem die Zentrierflächen bei gleichbleibend hohem Fertigungsaufwand genauer herstellbar werden. Dabei soll insbesondere das Rückfedern des Materials beim Umformen (Prägen) berücksichtigt werden, d. h. die Herstellung der Zentrierelemente soll mit einem möglichst geringen Umformgrad beim Prägen möglich sein.

Die **Lösung** dieser Aufgabe durch die Erfindung ist dadurch gekennzeichnet, dass das Zentrierelement des Deckblechs - im Radialschnitt betrachtet - eine Zentrierfläche aufweist, deren vom Deckblech abgewandtes axiales Ende entlang einem stetigen Verlauf in eine seitliche Grundebene des Deckblechs übergeht.

Es wird also nicht mehr - wie beim Stand der Technik - ein stufenartiger Übergang des Zentrierelements zurück zur Grundkontur des Deckblechs vorgesehen, sondern ein stetiger Übergang. Dabei ist vorzugsweise vorgesehen, dass das Zentrierelement im Radialschnitt betrachtet eine dreieckförmige Kontur aufweist.

Die Oberfläche der Zentrierfläche selber weist bevorzugt in radiale Richtung und bildet so eine gute Anlage für den Reibring.

Das Zentrierelement ist bevorzugt durch einen Prägevorgang ausgebildet, bei dem in die dem Zentrierelement gegenüber liegende Seitenfläche des Deckblechs eine Einprägung eingebracht wird. Diese Einprägung weist mit Vorteil - wie im Stand der Technik - im Radialschnitt eine rechteckförmige Kontur auf. Die Tiefe der Einprägung liegt dabei bevorzugt zwischen 60% und 140% der axialen Erstreckung der Zentrierfläche über der Grundkontur des Deckblechs.

Das Zentrierelement kann kontinuierlich und unterbrechungsfrei über den gesamten Umfang des Deckblechs umlaufen. Alternativ ist es aber genauso möglich, dass mehrere Zentrierelemente über Teile des Umfangs des Deckblechs umlaufen. Besonders bevorzugt sind vier Zentrierelemente über den Umfang des Deckblechs angeordnet. Dabei kann vorgesehen werden, dass sich jedes Zentrierelement über einen Umfangsabschnitt zwischen 50° und 70° erstreckt.

In vorteilhafter Weise kann durch die neue Form der Zentrierelemente ein verbesserter Umformprozess bewerkstelligt werden, da bei diesem das Material aufgrund der gewählten Form leichter in Richtung der Zentrier- und Führungsfläche fließen kann. Hierdurch bildet sich die Führungs- und Zentrierfläche mit höherer geometrischer Genauigkeit und mit geringen Verzügen aus. Die Zentrierfläche wird also genauer ausgebildet. Bedingt ist dies auch durch ein geringeres Rückfedern des Materials des Deckblechs bei der Fertigung der Zentrierelemente.

Möglich wird es auch, die Zentrierelemente unter sonst gleichen Bedingungen radial weiter weg von der Drehachse zu platzieren, was es ermöglicht, Reibringe mit größerem Durchmesser einzusetzen. Hierdurch ergibt sich ein vergrößertes Verschleißvolumen.

Ferner besteht die Möglichkeit, ein höheres Reibmoment mit derselben axialen Vorspannung wie bei vorbekannten Lösungen zu erzeugen oder - alternativ - dasselbe Reibmoment mit geringerer axialer Vorspannung herzustellen. Damit kann die Blechaufbiegung der Deckbleche herabgesetzt werden.

In der Zeichnung sind Ausführungsbeispiele der Erfindung dargestellt. Es zeigen:
- Fig. 1: den Radialschnitt durch eine Kupplungsscheibe einer Reibungskupplung gemäß der Erfindung,
- Fig. 2: die zu Fig. 1 zugehörige Seitenansicht der Kupplungsscheibe,
- Fig. 3: eine vergrößerte Darstellung des Bereichs "X" gemäß Fig. 1 in einer Ausgestaltung gemäß dem Stand der Technik,
- Fig. 4: eine vergrößerte Darstellung des Bereichs "X" gemäß Fig. 1 in einer Ausgestaltung gemäß der Erfindung,
- Fig. 5: ein Deckblech der Kupplungsscheibe in der Seitenansicht,
- Fig. 6: den Schnitt B-B gemäß Fig. 5 durch das Deckblech in einer Ausgestaltung gemäß dem Stand der Technik,
- Fig. 7: die Einzelheit "A" gemäß Fig. 6,
- Fig. 8: den Schnitt B-B gemäß Fig. 5 durch das Deckblech in einer Ausgestaltung gemäß der Erfindung und
- Fig. 9: die Einzelheit "B" gemäß Fig. 8.

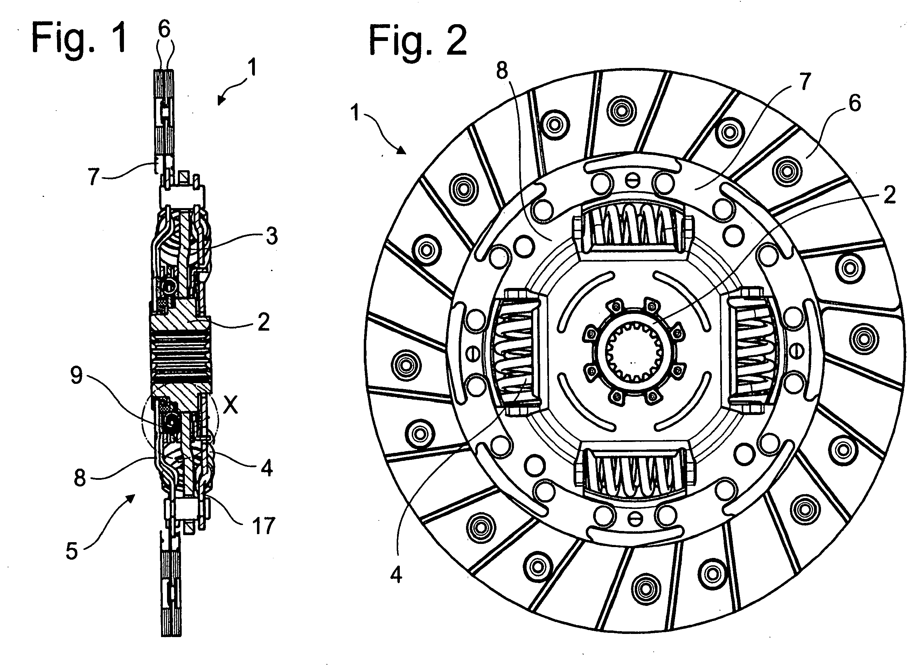

In Fig. 1 und Fig. 2 ist eine Kupplungsscheibe 1 einer Kraftfahrzeugkupplung zu sehen, die in bekannter Weise aufgebaut ist. Ein wesentliches Element der Kupplungsscheibe 1 ist eine Nabe 2, mit der die Kupplungsscheibe 1 drehfest, jedoch axial verschieblich auf einer nicht dargestellten Welle sitzt. Auf der Nabe 2 sitzt eine Nabenscheibe 3, die axial verschiebbar, jedoch drehfest über eine Verzahnung (nicht dargestellt) mit der Nabe 2 verbunden ist.

Um Drehschwingungen zu dämpfen, ist eine Torsionsschwingungsdämpfungsvorrichtung 5 vorgesehen, wie sie als solche im Stand der Technik hinlänglich bei gattungsgemäßen Kupplungsscheiben bekannt ist. Die Torsionsschwingungsdämpfungsvorrichtung 5 weist als einen wesentlichen Bestandteil eine Anzahl von Federelementen 4 auf, die in Aufnahmetaschen in der Nabenscheibe 3 und in Deckblechen 8 und 17 angeordnet sind; die Deckbleche begrenzen die Kupplungsscheibe 1 seitlich, wie aus Fig. 1 hervorgeht.

Mittel Nietverbindungen sind Belagträger 7 im radial äußeren Bereich der Deckbleche 8, 17 angebracht, an denen wiederum Reibbeläge 6 angeordnet sind. Insoweit sind Kupplungsscheiben 1 als vorbekannt zu erachten.

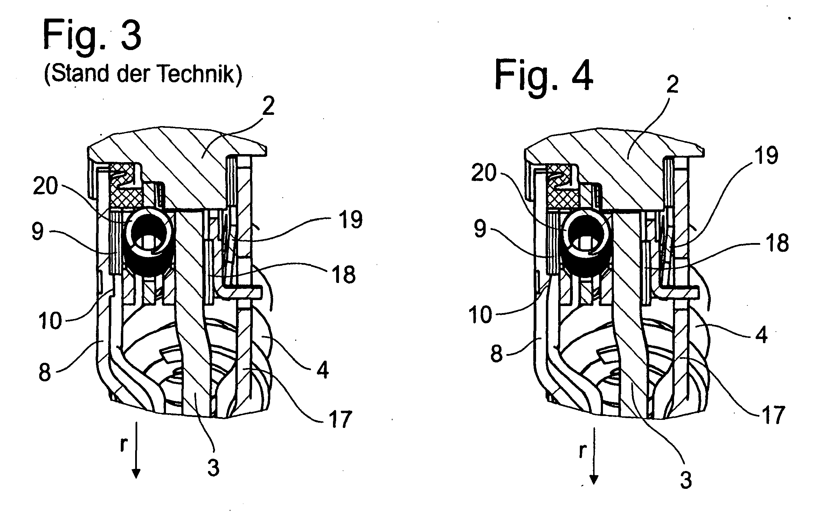

Bekannt ist es auch, dass die Torsionsschwingungsdämpfungsvorrichtung 5 einen Reibungsdämpfer umfasst, wie er aus den Figuren 3 und 4 im Detail hervorgeht. Kembestandteil sind hier Reibringe 9 und 18, die über eine Tellerfeder 19 axial zwischen den Deckblechen 8 und 17 vorgespannt sind. Hierdurch werden entstehende Torsionsschwingungen mittels Reibung gedämpft. Eine häufig vorgesehene ergänzende Einrichtung ist ein Vordämpfer 20, der jedoch im Zusammenhang mit der vorliegenden Erfindung nicht zwingend ist.

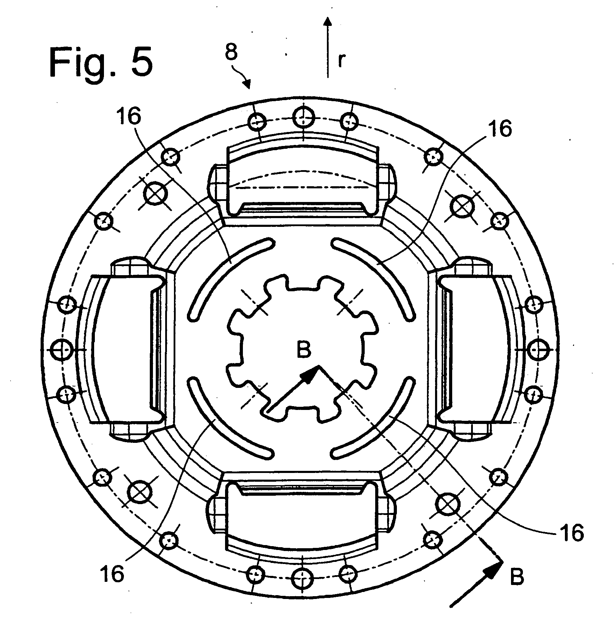

In Fig. 5 ist das Deckblech 8 dargestellt, auf das sich die nachfolgenden Figuren beziehen.

Unter Bezugnahme auf die Figuren 3, 6 und 7, die eine Lösung gemäß dem Stand der Technik darstellt, ist zu erkennen, dass zumindest eines der Deckbleche 8 mit einem Zentrierelement 10 versehen ist, das vorliegend fertigungstechnisch vorteilhaft mittels Umformung hergestellt ist. Hierzu ist in der vom Zentrierelement 10 abgewandten Seitenfläche 15 des Deckblechs 8 eine Einprägung 16 eingearbeitet, die als Durchprägung auf der anderen Seite des Deckblechs 8 als Erhebung zum Vorschein kommt. Diese Erhebung bildet eine Zentrierfläche 11, die eine Anlage für den Reibring 9 in radiale Richtung r bildet.

Wie zu sehen ist, bildet das Zentrierelement 10 - korrespondierend zur rechteckförmigen Einprägung 16 - eine stufenförmige Erhebung, die im Radialschnitt eine Rechteckform hat und die sich aus der seitlichen flächigen und ebenen Grundebene 14 des Deckblechs 8 erhebt. Die Form von Einprägung und Zentrierelement kann im Radialschnitt betrachtet als U-förmig angesprochen werden. Mit dieser Gestaltung gehen die eingangs genannten Nachteile einher.

Zur erfindungsgemäßen Abhilfe sieht die Ausgestaltung der Erfindung gemäß den Figuren 4, 8 und 9 vor, dass das Zentrierelement 10 - im Radialschnitt betrachtet - eine Zentrierfläche 11 aufweist, deren vom Deckblech 8 abgewandtes axiales Ende 12 entlang einem stetigen Verlauf 13 in die seitliche Grundebene 14 des Deckblechs 8 übergeht. Wie im Ausführungsbeispiel gemäß der genannten Figuren zu sehen ist, weist dabei das Zentrierelement 10 im Radialschnitt betrachtet eine dreieckförmige Kontur auf.

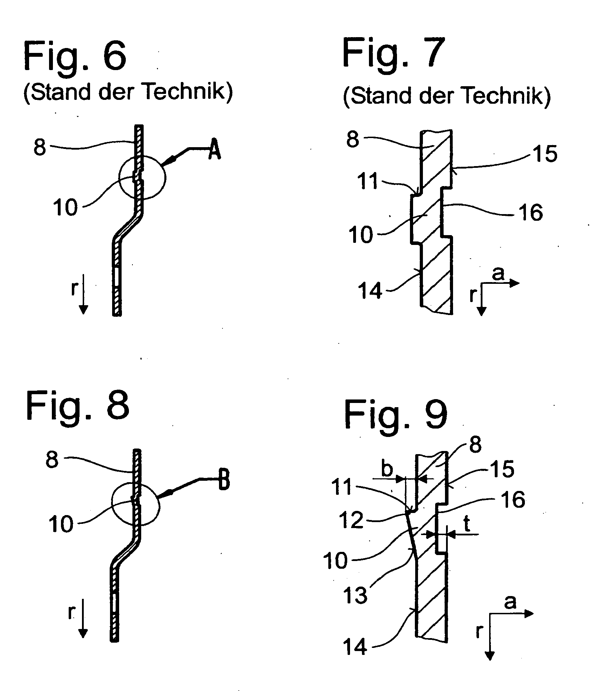

In Fig. 9 ist also zu erkennen, dass die Zentrierfläche 11 mit ihrer radial ausgerichteten Anlagefläche für den Reibring 9 bis zu einer Erstreckung b in axiale Richtung a aus der seitlichen Grundebene 14 des Deckblechs 8 herausragt, um in einem axialen Ende 12 zu enden. Von diesem Punkt 12 an wird die Erhebung 10 über den im Ausführungsbeispiel geraden Verlauf 13 in die seitliche Grundebene 14 zurückgeführt, so dass sich im Radialschnitt die dreieckige Ausgestaltung des Zentrierelements 10 ergibt.

Hervorgerufen wird dies durch die Einprägung 16, die wie im Stand der Technik auch hier im Radialschnitt rechteckförmig ausgebildet ist und eine Tiefe t aufweist, die in der Größenordnung der axialen Erstreckung b liegt.

Eine im Radialschnitt rechteckförmige Ausgestaltung der Einprägung 18 ist freilich keineswegs zwingend; es sind auch andere Ausgestaltungen möglich. Durch die rechteckförmige Einprägung wird hinreichend Material beim Durchprägen verdrängt, so dass sich das Zentrierelement 10 mit hoher geometrischer Genauigkeit ausbildet. Namentlich wird die Zentrierfläche 11 scharf und konturengenau ausgebildet und liefert damit eine gute Führung und Zentrierung des Reibrings 9. Durch die genannte Ausbildung der Zentrierelemente 10 ergeben sich weniger Unstetigkeiten in der Geometrie, was zu entsprechenden Vorteilen führt (insbesondere formgenauere Prägung).

Aufgrund der Gestaltung der Zentrierelemente 10 können diese radial weiter nach außen verlagert werden, was den Einsatz größerer Reibringe erlaubt. Dies hat die oben genannten Vorteile zur Folge.

Wegen geringerer Umformspannungen aufgrund der gewählten Form der Zentrierelemente wird in vorteilhafter Weise auch erreicht, dass sich geringere Verzüge beim Härten ergeben.

### Bezugszeichenliste

- 1: Kupplungsscheibe
- 2: Nabe
- 3: Nabenscheibe
- 4: Federelement
- 5: Torsionsschwingungsdämpfungsvorrichtung
- 6: Reibbelag
- 7: Belagträger
- 8: Deckblech
- 9: Reibring
- 10: Zentrierelement
- 11: Zentrierfläche
- 12: axiales Ende des Zentrierelements
- 13: stetiger Verlauf
- 14: seitliche Grundebene
- 15: Seitenfläche
- 16: Einprägung
- 17: Deckblech
- 18: Reibring
- 19: Tellerfeder
- 20: Vordämpfer

- r: radiale Richtung
- t: Tiefe der Einprägung
- a: axiale Richtung
- b: axiale Erstreckung der Zentrierfläche

## Patentansprüche

1. Kupplungsscheibe (1), insbesondere Kupplungsscheibe einer Reibungskupplung, die eine Nabe (2) und eine mit dieser drehfest verbundene Nabenscheibe (3) aufweist, wobei die Nabenscheibe (3) über eine eine Anzahl Federelemente (4) aufweisende Torsionsschwingungsdämpfungsvorrichtung (5) mit mindestens einem mindestens einen Reibbelag (6) tragenden Belagträger (7) verbunden ist, wobei die Torsionsschwingungsdämpfungsvorrichtung (5) weiterhin mindestens ein mit dem Belagträger (7) verbundenes Deckblech (8) aufweist, wobei am Deckblech (8) ein Reibring (9) axial vorgespannt anliegt und wobei das Deckblech (8) mindestens ein zumindest über einen Teil des Umfangs des Deckblechs (8) umlaufendes Zentrierelement (10) für den Reibring (9) aufweist, wobei das Zentrierelement (10) als Erhebung ausgebildet ist und gegenüber einer seitlichen Grundebene (14) des Deckblechs (8) hervorsteht,
**dadurch gekennzeichnet,**
**dass** das Zentrierelement (10) im Radialschnitt betrachtet eine Zentrierfläche (11) aufweist, deren vom Deckblech (8) abgewandtes axiales Ende (12) entlang einem stetigen Verlauf (13) in die seitliche Grundebene (14) des Deckblechs (8) übergeht.

2. Kupplungsscheibe nach Anspruch 1, **dadurch gekennzeichnet, dass** die Oberfläche der Zentrierfläche (11) in radiale Richtung weist.

3. Kupplungsscheibe nach Anspruch 1 oder 2, **dadurch gekennzeichnet, dass** das Zentrierelement (10) im Radialschnitt betrachtet eine dreieckförmige Kontur aufweist.

4. Kupplungsscheibe nach einem der Ansprüche 1 bis 3, **dadurch gekennzeichnet, dass** das Zentrierelement (10) durch einen Prägevorgang ausgebildet ist, bei dem in die dem Zentrierelement (10) gegenüber liegende Seitenfläche (15) des Deckblechs (8) eine Einprägung (16) eingebracht wird.

5. Kupplungsscheibe nach Anspruch 4, **dadurch gekennzeichnet, dass** die Einprägung (16) im Radialschnitt eine rechteckförmige Kontur aufweist.

6. Kupplungsscheibe nach Anspruch 5, **dadurch gekennzeichnet, dass** die Tiefe (t) der Einprägung (16) zwischen 60% und 140% der axialen Erstreckung (b) der Zentrierfläche (11) über der Grundkontur des Deckblechs (8) entspricht.

7. Kupplungsscheibe nach einem der Ansprüche 1 bis 6, **dadurch gekennzeichnet, dass** das Zentrierelement (10) kontinuierlich über den gesamten Umfang des Deckblechs (8) umläuft.

8. Kupplungsscheibe nach einem der Ansprüche 1 bis 6, **dadurch gekennzeichnet, dass** mehrere Zentrierelemente (10) über Teile des Umfangs des Deckblechs (8) umlaufen.

9. Kupplungsscheibe nach Anspruch 8, **dadurch gekennzeichnet, dass** vier Zentrierelemente (10) über den Umfang des Deckblechs (8) angeordnet sind.

10. Kupplungsscheibe nach Anspruch 9, **dadurch gekennzeichnet, dass** sich jedes Zentrierelement (10) über einen Umfangsabschnitt zwischen 50° und 70° erstreckt.

## Claims

1. Clutch disc (1), in particular clutch disc of a friction clutch, which has a hub (2) and a hub disc (3) rotationally fixedly connected to said hub (2), with the hub disc (3) being connected to at least one lining carrier (7), which bears at least one friction lining (6), by means of a torsional vibration damping device (5) which has a number of spring elements (4), with the torsional vibration damping device (5) also having at least one cover plate (8) which is connected to the lining carrier (7), with a friction ring (9) bearing under axial preload against the cover plate (8) and with the cover plate (8) having at least one centring element (10), which runs around at least over a part of the circumference of the cover plate (8), for the friction ring (9), with the centring element (10) being formed as an elevation and protruding beyond a lateral base plane (14) of the cover plate (8),
**characterized**
**in that** the centring element (10), as viewed in radial section, has a centring surface (11) whose axial end (12) facing away from the cover plate (8) merges along a continuous profile (13) into the lateral base plane (14) of the cover plate (8).

2. Clutch disc according to Claim 1, **characterized in that** the surface of the centring surface (11) points in the radial direction.

3. Clutch disc according to Claim 1 or 2, **characterized in that** the centring element (10) has a triangular contour as viewed in radial section.

4. Clutch disc according to one of Claims 1 to 3, **characterized in that** the centring element (10) is formed by means of an embossing process in which an embossing (16) is formed **in that** side surface (15) of the cover plate (8) which is situated opposite the centring element (10).

5. Clutch disc according to Claim 4, **characterized in that** the embossing (16) has a rectangular contour in radial section.

6. Clutch disc according to Claim 5, **characterized in that** the depth (t) of the embossing (16) corresponds to between 60% and 140% of the axial extent (b) of the centring surface (11) over the base contour of the cover plate (8).

7. Clutch disc according to one of Claims 1 to 6, **characterized in that** the centring element (10) runs around continuously over the entire circumference of the cover plate (8).

8. Clutch disc according to one of Claims 1 to 6, **characterized in that** a plurality of centring elements (10) run around over parts of the circumference of the cover plate (8).

9. Clutch disc according to Claim 8, **characterized in that** four centring elements (10) are arranged over the circumference of the cover plate (8).

10. Clutch disc according to Claim 9, **characterized in that** each centring element (10) extends over a circumferential segment of between 50° and 70°.

## Revendications

1. Disque d'embrayage (1), notamment disque d'embrayage d'un embrayage à friction, qui présente un moyeu (2) et un disque de moyeu (3) connecté de manière solidaire en rotation à celui-ci, le disque de moyeu (3) étant connecté par le biais d'un dispositif d'amortissement des oscillations de torsion (5) présentant une pluralité d'éléments de ressort (4), à au moins un support de garniture (7) portant au moins une garniture de friction (6), le dispositif d'amortissement des oscillations de torsion (5) présentant en outre au moins une tôle de recouvrement (8) connectée au support de garniture (7), une bague de friction (9) s'appliquant avec une précontrainte axiale contre la tôle de recouvrement (8) et la tôle de recouvrement (8) présentant au moins un élément de centrage (10) pour la bague de friction (9), entourant au moins une partie de la périphérie de la tôle de recouvrement (8), l'élément de centrage (10) étant réalisé sous forme de rehaussement et faisant saillie par rapport à un plan de base latéral (14) de la tôle de recouvrement (8),
**caractérisé en ce que**
l'élément de centrage (10) présente, en coupe radiale, une surface de centrage (11) dont l'extrémité axiale (12) opposée à la tôle de recouvrement (8) se prolonge suivant une allure constante (13) par le plan de base latéral (14) de la tôle de recouvrement (8).

2. Disque d'embrayage selon la revendication 1, **caractérisé en ce que** la surface de la surface de centrage (11) est tournée dans la direction radiale.

3. Disque d'embrayage selon la revendication 1 ou 2, **caractérisé en ce que** l'élément de centrage (10), vu en coupe radiale, présente un contour triangulaire.

4. Disque d'embrayage selon l'une quelconque des revendications 1 à 3, **caractérisé en ce que** l'élément de centrage (10) est réalisé par une opération de gaufrage, dans laquelle un gaufrage (16) est pratiqué dans la surface latérale (15) de la tôle de recouvrement (8) opposée à l'élément de centrage (10).

5. Disque d'embrayage selon la revendication 4, **caractérisé en ce que** le gaufrage (16) présente en coupe radiale un contour rectangulaire.

6. Disque d'embrayage selon la revendication 5, **caractérisé en ce que** la profondeur (t) du gaufrage (16) correspond à une valeur entre 60% et 140% de l'étendue axiale (b) de la surface de centrage (11) sur le contour de base de la tôle de recouvrement (8).

7. Disque d'embrayage selon l'une quelconque des revendications 1 à 6, **caractérisé en ce que** l'élément de centrage (10) entoure en continu toute la périphérie de la tôle de recouvrement (8).

8. Disque d'embrayage selon l'une quelconque des revendications 1 à 6, **caractérisé en ce que** plusieurs éléments de centrage (10) entourent des parties de la périphérie de la tôle de recouvrement (8).

9. Disque d'embrayage selon la revendication 8, **caractérisé en ce que** quatre éléments de centrage (10) sont disposés sur la périphérie de la tôle de recouvrement (8).

10. Disque d'embrayage selon la revendication 9, **caractérisé en ce que** chaque élément de centrage (10) s'étend sur une portion périphérique comprise entre 50° et 70°.
